# EUROPEAN PATENT APPLICATION

(11) **EP 4 625 364 A1**
(43) Date of publication of application: **01.10.2025**
(21) Application number: 24167543.8
(22) Date of filing: 28.03.2024
(51) Int. Cl.: G06V 20/58, G06V 10/50, G06V 10/62, G06V 10/82

(54) **A METHOD FOR DETERMINING FREE SPACE IN A SURROUNDING OF A VEHICLE, AND AN APPARATUS THEREOF**

(71) Applicant: Zenseact AB, 417 56 Göteborg (SE)
(72) Inventor: VENKATESH, Varun, 426 50 Göteborg (SE); NILSSON, Staffan, 414 72 Göteborg (SE); STEFANSSON, Thor, 417 39 Göteborg (SE); ERNST, Mathias, 414 73 Göteborg (SE); ADIL, Ömer Faruk, 447 34 Vårgårda (SE)
(74) Representative: Zacco Sweden AB

(57) **Abstract**

A method (400) for identifying free space in a surrounding of a vehicle (1) is disclosed. The method comprises obtaining (402) image data (202) by an image sensor (100) comprised in the vehicle (1), wherein the image data is depicting the surrounding of the vehicle, determining (404) blocked pixels in the image data (202) , wherein the blocked pixels are blocked due to obstructions of the image sensor's field of view, determining (406) blocked points linked to the blocked pixels by transforming the blocked pixels of an image plane (204) of the image sensor (100) into the blocked points in a ground plane (206) of the surrounding by using a planar projection assumption model (200), identifying (408) blocked cells and non-blocked cells of an occupancy grid (102) in the ground plane (206) by determining the blocked points in the ground plane for different cells of the occupancy grid, wherein the cell is identified as one of the blocked cells if a blockage criterion is met and identified as one of the non-blocked cells if a non-blockage criterion is met, and determining (410) the free space in the surrounding of the vehicle based on the image data in combination with status of the different cells in the occupancy grid, wherein the status of one the different cells comprises being one of the blocked cells or being one of the non-blocked cells.

## Description

### TECHNICAL FIELD

The disclosed technology relates to methods and systems for determining free space in a surrounding of a vehicle. In particular, but not exclusively the disclosed technology relates to methods for estimating driveable free space using image data.

### BACKGROUND

Today, modern cars and other vehicles are equipped with a variety of sensors to enhance security, improve driving comfort and enable features like autonomous driving. These sensors are used for estimating free space around the vehicle, detecting obstacles and understanding the vehicle's surroundings. Some sensor types used today include ultrasonic sensors, radar sensors, LiDAR (Light Detection and Ranging) sensors, cameras and IR (infrared) sensors. The ultrasound sensors are typically used for parking assistance and low-speed manoeuvres. The radar sensors can be used for calculating distance, speed and angle relative to the vehicle. They can be used for adaptive cruise control, collision avoidance and blind-spot detection. This sensor type are effective at longer distances and work well in various weather conditions. The LiDAR sensors use pulsed laser light and are often used for measuring distances to objects. This type of sensors can create a detailed 3D map of the vehicle's surroundings and for that reason, this is commonly used for autonomous vehicles. The cameras, or more specifically optical cameras, provide visual data, also referred to as image data, and these are today commonly used for object and lane detection, traffic sign recognition and driver monitoring. The IR sensors can detect heat signatures and are particularly useful for night vision systems. Further, these sensors can be used for detecting living beings in low visibility conditions.

As described above, having sensors included in the vehicles can be done for a number of different reasons. By way of example, the sensors may be used for detecting obstacles, other vehicles and pedestrians in the surrounding of the vehicle and, upon detection, triggering alerts to the driver or triggering automatic emergency braking systems to prevent collisions. The sensors can also be used for increased convenience. Features like autonomous driving, adaptive cruise control and lane keeping assistance often rely on detections made by the sensors. By optimizing driving patterns and reducing unnecessary acceleration and braking, the sensors can also contribute to increased vehicle efficiency. In terms of autonomous driving, by using the sensors it is made possible to accurately perceive the surrounding of the vehicle and to reliably estimate the free space around the vehicle, thereby making it possible to safely navigate the vehicle with no or limited human intervention.

Even though there is a wide range of the sensors available, the sensors may from time to time not be able to operate due to that these are obstructed in various ways. For instance, these may be covered by dirt, raindrops, sunglare and other objects hindering them to operate as intended. However, by having several sensors and also different types of sensors, such as cameras combined with LiDARs, it is made possible to handle situations in which some of the sensors are temporarily hindered from providing input to e.g. an autonomous driving control device. To detect and avoid situations in which there may be a risk that systems relying on sensor data cannot operate safely, algorithms have been developed that can detect such situations and inactivate functionality depending on the sensor data. For instance, in case the sensors of an autonomous driving vehicle are detected to be covered by dirt, the vehicle may be steered to a side of the road and stopped such that the sensors can be cleaned. Another possibility is that a notification is provided to the driver of the vehicle that he or she has to manually drive the vehicle due to that the sensors are covered.

### SUMMARY

The herein disclosed technology seeks to mitigate, alleviate or eliminate one or more of the above-identified deficiencies and disadvantages in the prior art to address various problems relating to sensors, provided in or on a vehicle, that are obstructed by dirt, raindrops or other objects such that the field of view of these sensors are obstructed.

Various aspects and embodiments of the disclosed invention are defined below and in the accompanying independent and dependent claims.

A first aspect of the disclosed technology comprises a method for identifying free space in a surrounding of a vehicle, the method comprising obtaining image data by an image sensor comprised in the vehicle, wherein the image data is depicting the surrounding of the vehicle, determining blocked pixels in the image data, wherein the blocked pixels are blocked due to obstructions of the image sensor's field of view, determining blocked points linked to the blocked pixels by transforming the blocked pixels of an image plane of the image sensor into the blocked points in a ground plane of the surrounding by using a planar projection assumption model, identifying blocked cells and non-blocked cells of an occupancy grid in the ground plane by determining the blocked points in the ground plane for different cells of the occupancy grid, wherein the cell is identified as one of the blocked cells if a blockage criterion is met and identified as one of the non-blocked cells if a non-blockage criterion is met, and determining the free space in the surrounding of the vehicle based on the image data in combination with status of the different cells in the occupancy grid, wherein the status of one the different cells comprises being one of the blocked cells or being one of the non-blocked cells.

A second aspect of the disclosed technology comprises an apparatus for identifying free space in a surrounding of a vehicle, the apparatus comprising a control circuitry configured to obtain image data by an image sensor comprised in the vehicle, wherein the image data is depicting the surrounding of the vehicle, determine blocked pixels in the image data based on the image data, wherein the blocked pixels are blocked due obstructions of the image sensor's field of view, determine blocked points linked to the blocked pixels by transforming the blocked pixels of an image plane of the image sensor into the blocked points in a ground plane of the surrounding by using a planar projection assumption model, identify blocked cells and non-blocked cells of an occupancy grid in the ground plane by determining the blocked points in the ground plane for different cells of the occupancy grid, wherein the cell is identified as one of the blocked cells if a blockage criterion is met and identified as one of the non-blocked cells if a non-blockage criterion is met, and determine the free space in the surrounding of the vehicle based on the image data in combination with the status of the different cells in the occupancy grid, wherein the status of one the different cells is either being one of the blocked cells or being one of the non-blocked cells.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that by transforming blocked pixels in the image plane to blocked points in the ground plane and thereafter identify the blocked cells in the occupancy grid, it is taken into account that different blocked pixels may give rise to different effects on the occupancy grid. In this way, when determining the free space, the effects of the blocked pixels can be determined more accurately.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1A illustrates a vehicle and an occupancy grid linked to the vehicle in a situation in which there is no blockage of the field of view of an image sensor of the vehicle.
Fig. 1B illustrates the vehicle illustrated in fig. 1A, but in a situation in which one side of the image sensor is blocked.
Fig. 1C illustrates the vehicle illustrated in fig. 1A and 1B, but in a situation in which the side of the image sensor is partly blocked.
Fig. 2A illustrates an example of image data and how pixels of the image data can be transformed into points on a ground plane by using a planar projection assumption model.
Fig. 2B illustrates three frames of the image data, wherein part of the pixels are temporarily blocked by a wiper.
Fig. 3 is a schematic illustration of an Automated Driving System (ADS) equipped vehicle.
Fig. 4 is a flowchart illustrating a method for identifying free space in a surrounding of the vehicle.
Fig. 5 is a block diagram representation of the vehicle.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

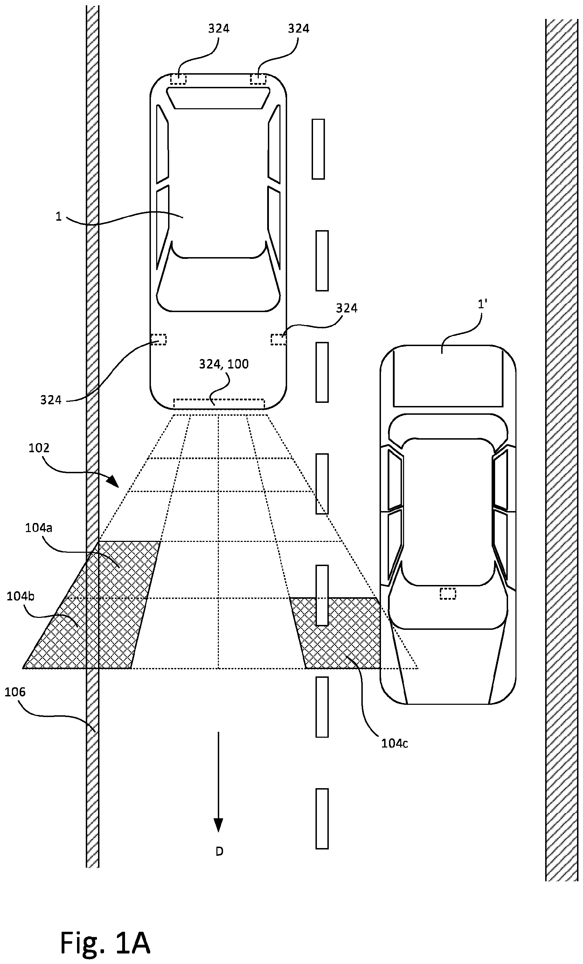

Fig. 1A illustrates a vehicle 1, more particularly a car, driving in a right lane of a road, seen from a driving direction D, and having another car 1' besides and ahead in a left lane of the road. As illustrated, the vehicle 1 is equipped with a number of sensors 324 for serving different purposes, such as providing blind spot alerts to a driver of the vehicle 1 or for identifying free space in a surrounding of the vehicle 1. Among the sensors 324, which are further described in detail below, an image sensor 100 may be provided. The image sensor 100 may, as illustrated, be placed in a front of the vehicle 1, but other locations are equally possible and depends on the purpose to be served. For illustrative purposes, the image sensor 100 depicted is made to cover a large part of the front of the vehicle 1. In real world applications, the image sensor 100 is however most often covering a smaller portion of the front. Further, the image sensor is often integrated into a camera that is in turn integrated into the vehicle 1. Even though "image data" is herein generally used as data generated by a CMOS sensor or other device arranged to transform incoming light into electronic signals, the concepts described herein can be applied for any type of sensor generating two-dimensional data related to the surrounding of the vehicle, and for that reason the term "image data" should in this context be construed broadly.

To identify the free space in the surrounding, an occupancy grid 102 comprising a number of cells can be used. By using such structured approach, using sensor data from different sensors can be more efficient, and it is also possible to improve computational efficiency since different cells may require different levels of data analysis. In the example illustrated in fig. 1A, a first and a second occupied cell 104a-b are provided in a left column of the occupancy grid 102, and a third occupied cell 104c is provided in a right column of the occupancy grid 102. The first and second occupied cell 104a,b are identified as occupied because of a median barrier 106, that is, a stone wall or similar, being placed in an area of the surrounding of the vehicle corresponding to these two cells. The third occupied cell 104c is occupied due to that there is another vehicle 1' placed in an area corresponding to this cell.

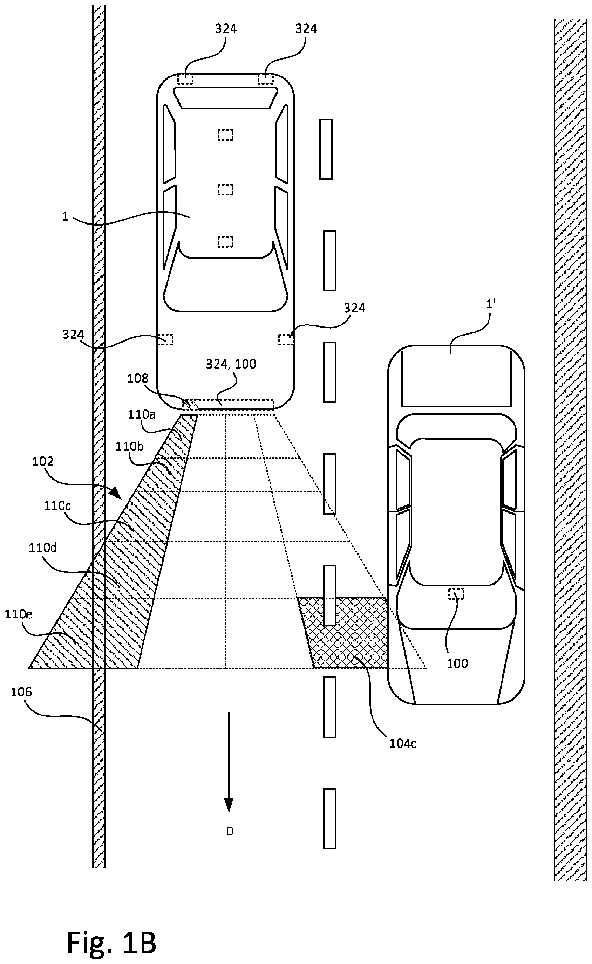

Fig. 1B illustrates another situation by way of example. Similar to the situation illustrated in fig. 1A, the vehicle 1 is equipped with the image sensor 100 and the other vehicle 1' is placed next to and ahead of the vehicle 1, and the median barrier 106 is present next to a right side of the vehicle 1, seen from the driving direction D.

Unlike the situation exemplified in fig. 1A, dirt 108 is provided on part of the image sensor 100. The dirt 108 may be dust, clay, soil or any other type of objects that may obstruct a field of view of the image sensor 100. Even though not illustrated, the image sensor 100 may be provided with a protective glass, which may be made of glass but also other transparent material allowing light to pass, and the dirt 108 may be placed on this protective glass. In addition to the dirt 108, it is also possible that the image sensor is obstructed by raindrops, ice provided on an outside of the protective glass, condensation on an inside of the protective glass, sun glare, or any other weather related objects that may obstructing the field of view. Further, the image sensor 100 may also be obstructed by wipers or other objects arranged on the vehicle and configured to temporarily obstruct the field of view of the image sensor 100. In some examples, the protective glass may form part of a windshield of the vehicle. By way of example, such arrangement, that is, the image sensor 100 placed under the windshield, is provided on the other vehicle 1' illustrated in fig. 1B.

As an effect of the dirt 108, in this example provided on a rightmost part of the image sensor 100 seen from the driving direction D, incoming light related to the rightmost column of the occupancy grid 102 is hindered from reaching the image sensor 100. This in turn results in that the five cells of this column are blocked cells 110a-e, that is, cells that do not provide any input when determining the free space in the surrounding of the vehicle 1. Since the median barrier 106 is placed in the area corresponding to the rightmost column of the occupancy grid 102, seen from the driving direction D, an effect of the dirt 108 placed on the image sensor 100, as illustrated in fig. 1b, is that the first and second occupied cells 104a, b identified in the situation illustrated in fig. 1A cannot be identified in the situation illustrated in fig. 1B. Since the leftmost column of the occupancy grid 102, seen from the driving direction D, is not affected by the dirt 108, the third occupied cell, related to the other vehicle 1', can be identified in the same manner as in the situation illustrated in fig. 1A. Since the dirt 108 placed on the image sensor 100, as illustrated in fig. 1b, may pose a risk that the median barrier 106 is not detected, any functionality of the vehicle 1 relying on the image data generated by the image sensor 100 may be deactivated and the driver of the vehicle may be notified.

Using a binary approach for handling obstruction of the image sensor's 100 field of view, that is, allowing the functionality depending on the image data to be activated or deactivated, may however lead to unwanted effects. On one hand, if being overly cautious and not allowing any dirt 108, or other objects obstructing the field of view of the image sensor 100, this may result in that functionalities such as adaptive cruise control, parking assistance, etc. are deactivated too often. Put differently, by being too strict that could make some functionalities unnecessarily deactivated in situations with low or no risk involved. On the other hand, if allowing too much dirt on the image sensor 100, there is a risk that the functionalities cannot be trusted and that other systems may need to intervene to avoid e.g. collisions.

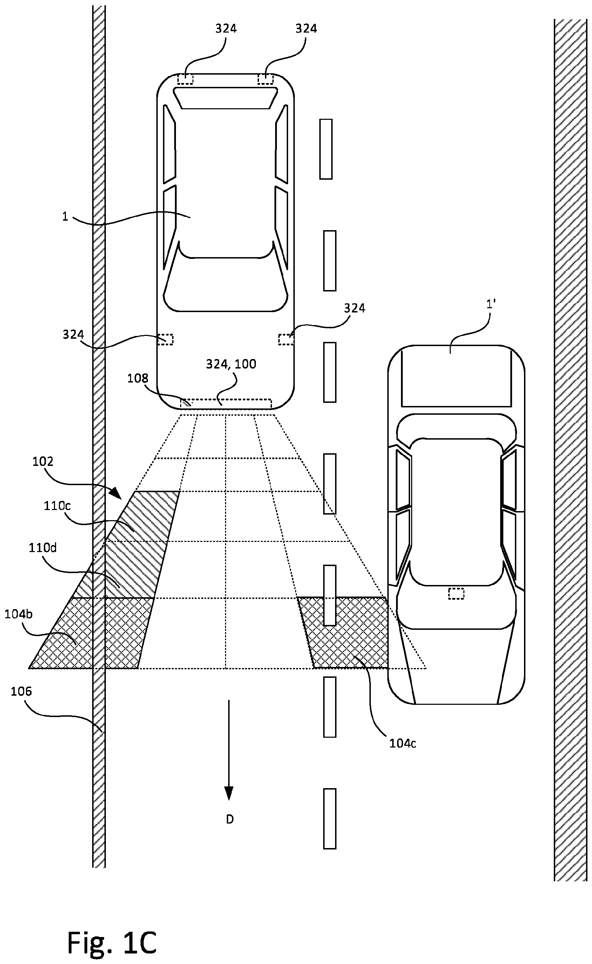

Fig. 1C illustrates a third situation. As in the situations illustrated in fig. 1A and fig. 1B, the vehicle 1 is placed on the road with the median barrier to the right, seen from the driving direction D of the vehicle, and the other vehicle 1' placed to the left. Unlike the situations in fig. 1A and fig. 1B, the dirt 108 placed on the image sensor 100 only results in that a few cells of the rightmost column of the occupancy grid 102 are blocked. More particularly, the dirt 108 in this situation results in two blocked cells 110c,d, that is, only a part of the rightmost column of the occupancy grid 102 is blocked by the dirt 108. As illustrated in fig. 1C, this comes with the effect that the median barrier 106 can be detected and that the second occupied cell 104b, also present in the situation exemplified in fig. 1A, but not present in the situation exemplified in fig. 1B, is forming part of input provided to functionalities relying in the image data. Put differently, since the dirt 108 can be limited to a few blocked cells 110c,d, it may be possible to continue having functionalities, such as parking assistance, activated even though the field of view is partially blocked by the dirt 108 placed on the image sensor 100.

As suggested above, instead of making a binary decision on whether or not reliable image data is generated by the image sensor 100 by looking at a number of pixels affected by the obstruction caused by the dirt 108, or other objects placed on the image sensor, it is suggested herein that the blocked pixels are transformed into blocked points and that these blocked points in turn are used for identifying the blocked cells. Put differently, instead of making a decision based on the pixels affected, that is a direct effect on the image plane, the effects are viewed from the perspective of the ground plane of the surrounding.

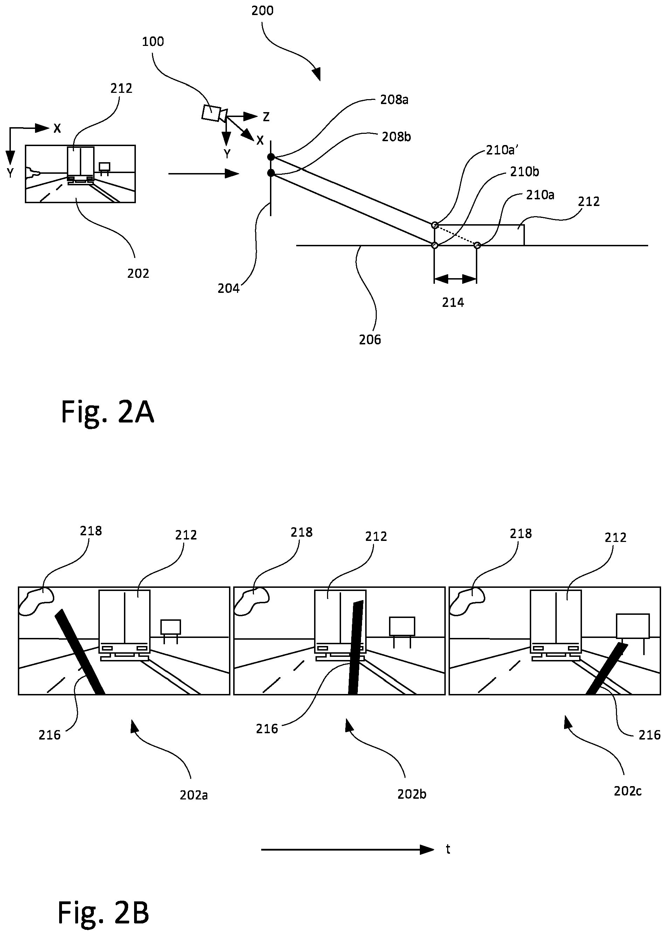

As illustrated in fig. 2A, the blocked pixels may be transformed into the blocked points by using a planar projection assumption model 200, such as a pinhole camera model or a Kannala model, sometimes referred to as the Kannala-Sandberg model. By using such model, the image data 202, being two-dimensional, is transformed from an image plane 204 into a ground plane 206 of a three-dimensional space. As illustrated, a first and a second pixel 208a,b may be transformed into a first and a second point 210a,b of the ground plane 206, respectively. The blocked pixels are defined by two coordinates and the blocked points are defined by three coordinates.

The transformation may take into account whether or not there is an object 212, herein in the form of a truck, present or not. In case there is no objects, as is the case for the transformation of the first pixel 208a to the first point 210a, the assumption made by the model will generally coincide with a corresponding first point of a three-dimensional real world depicted by the image data 102. The same holds true if it can be assumed that present objects are flat objects, e.g. lane indications.

In case the object 212 is present, as illustrated in fig. 2A, the planar projection assumption model 200 may result in that there is an error 214 between the first point 210a determined based on the planar protection model 200 solely and a depth map compensated second point 210a' determined based on the planar projection model 200 in combination with depth map data, herein also referred to as depth data or 3D data. In other words and by way of example, in case the first pixel 208a is blocked by dirt and there is no object 212 present, the first point 210a will be considered one of the blocked points. In case the object 212 is present, this will be indicated by the depth data and the blocked point may instead be the depth map compensated second point 210a'. Even though reference is made herein to the object 212, it is to be understood that the 3D data, or depth data, does not necessarily need to comprise explicit information on specific objects. For instance, in case LiDAR data is used as the 3D data, this data may be in the form of point clouds. Even though no specific objects are addressed in this information, this will still provide information on that a truck or other object may be present in the field of view of the image sensor. Since some applications do not require that the points are depth map compensated, the depth data as well as the depth map compensation can be considered optional.

The 3D data may be captured by using a 3D sensor arrangement comprised in the vehicle 1. Such arrangement may comprise the image sensor 100 itself and a neural network or other machine learning model. The neural network may be trained based on the image data 202 captured during a training phase by the image sensor 100 and point cloud data captured during the training phase by a Light Detection and Ranging (LiDAR) sensor or other sensor capable of generating the point cloud data. Put differently, the 3D sensor arrangement may be a mono camera combined with the neural network trained to generate the 3D data based on monocular image data. Thus, the image sensor 100 can be used both for capturing the image data 202 and generating the 3D data together with the neural network or other machine learning model. Other options are that the 3D sensor arrangement is a Light Detection and Ranging (LiDAR) sensor or a stereo camera arrangement.

By being able to detect the object 212 by using the 3D data, this information can be taken into account when transforming the blocked pixels into the blocked points. Since a flat objection assumption may be sufficient for certain applications, the principle can also be applied without taking into account the 3D data. Such situation may, by way of example, be applicable when several systems are working in parallel.

By having access to the image data, the 3D data and status of the different cells in the occupancy grid, that is, blocked cells or non-blocked cells, it is made possible to determine the free space in the surrounding with an improved accuracy and with improved reliability.

As illustrated in fig. 2B, the blocked pixels may come in different forms. In the examples illustrated, a wiper 216 is placed in front of the image sensor 100 resulting in that pixels are temporarily blocked. As illustrated, by capturing a plurality of frames 202a-c, herein three frames, of image data over a period of time, temporarily blocked pixels can be identified. In addition to the temporarily blocked pixels, non-temporarily blocked pixels may also be identified. The non-temporarily blocked pixels may be related to dirt 218 provided on the image sensor. The temporarily blocked pixels may be pixels estimated to be blocked for a pre-determined period of time or less, e.g. one second, and the non-temporarily pixels may be estimated to be blocked for more than the pre-determined period of time.

By not only knowing that the pixels are blocked, but that they are temporarily blocked or non-temporarily blocked, it is made possible to take this into account when determining the status of the blocked cells. For instance, the status of the blocked cells of the occupancy grid linked to the non-temporarily blocked pixels may be assigned as one of the blocked cells while the blocked cells of the occupancy grid linked to the temporarily blocked pixels may be assigned as one of the non-blocked cells and assigned with the image data used in a preceding frame among the plurality of frames. Put differently, when having the wiper 216 swiped over the field of view of the image sensor, the pixels affected by the wiper may be identified as the temporarily blocked pixels. As an effect, the cells linked to these pixels may instead of being set as one of the blocked cells, be set as one of the non-blocked cells and information about the cells may be gathered from one or more of the preceding frames, e.g. information on whether the cells are occupied cells or non-occupied cells. On the other hand, pixels blocked by the dirt 218, which is in this context remains in the same place for more than the pre-determined period of time and as an effect is considered non-temporary, may be transformed into blocked points that in turn give rise to blocked cells. Put differently, in case the pixels are blocked by the dirt 218 or other object that is blocking the image sensor 100 for more than the pre-determined period of time, this may result in that the cells of the occupancy grid associated to these pixels are considered blocked cells, but in case the pixels are blocked temporarily by e.g. the wipers 216, the cells associated to these temporarily blocked pixels may be considered non-blocked cells and historical data, e.g. data from previous frames, may be used.

The temporarily and non-temporarily blocked pixels may be determined purely from a time perspective, but also based on a combination of the image data and the 3D data. Another option is to have the temporarily and non-temporarily blocked pixels determined based on a combination of the image data and vehicle odometry data, more particularly visual odometry data, that is, information about the movement or displacement of the vehicle. As illustrated in fig. 2B, based on the surrounding depicted by the image data for the different frames, it is possible to generate such visual odometry data. For instance, as illustrated, a sign placed to the right in the frames may change in size between the different frames, which is a visual indication that the vehicle is moving forward along a road. Since the truck depicted in the frames has a constant size between the different frames, there is also a visual indication that a distance between the vehicle and the truck is about the same at the different points of time in which the frames are captured. By way of example, temporary or non-temporary blocked pixels may be determined based on several consecutive frames, such as historical frames and current frame, by using a neural network. According to another example, a number of historical occupancy grids may be saved and transformed to current frame (current timestamp) using vehicle odometry data, such as visual odometry data, to identify the temporarily blocked pixels and, by using the planar assumption projection model, the blocked points.

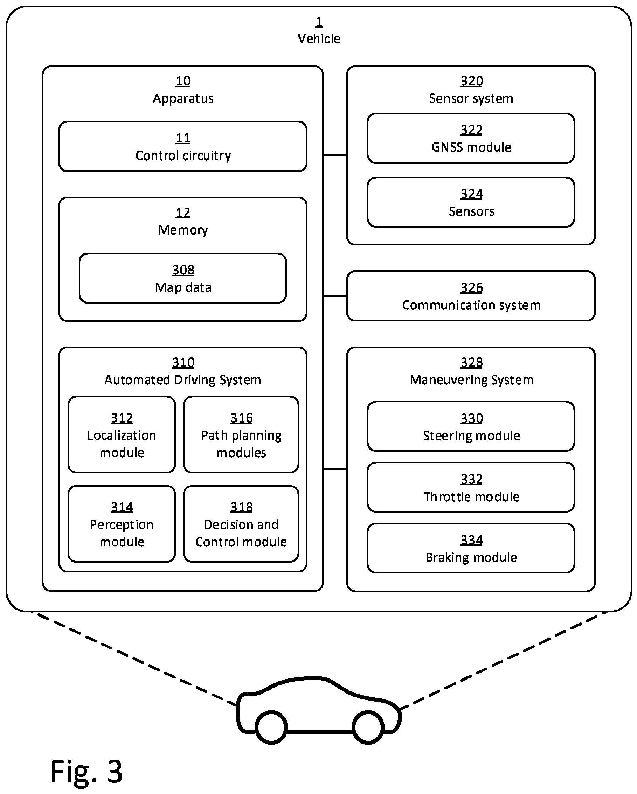

Fig. 3 is a schematic illustration of the vehicle 1, more particularly an ADS-equipped vehicle 1 comprising an apparatus 10. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 1. Moreover, the vehicle 1 may comprise further elements than those shown in Fig. 1. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 1 should be seen merely as an illustrative example, as the elements of the vehicle 1 can be realized in several different ways.

The vehicle 1 further comprises a sensor system 320. The sensor system 320 is configured to acquire sensory data, also referred to as sensor data, about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The control circuitry, sometimes referred to as processor(s), 11 associated with the apparatus 10 may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

### ADS feature/function

The ADS comprises an ADS feature (may also be referred to as ADS function) that is preferably a level 3 feature or higher according to SAE J3016 levels of driving automation for on-road vehicles. The ADS feature may for example be a traffic jam pilot, a highway pilot, or any other SAE J3016 level 3+ ADS feature.

### Machine-learning algorithm

The machine-learning algorithms (may also be referred to as machine-learning models, neural networks, and so forth) are implemented in some embodiments using publicly available suitable software development machine learning code elements, for example, such as those which are available in Python, Keras and TensorFlow or in any other suitable software development platform, in any manner known to be suitable to someone of ordinary skill in the art.

### Geographical position

Geographical position of the ego-vehicle is in the present context to be construed as a map position (may also be referred to as in-map position) of the ego-vehicle. In other words, a geographical position or map position can be understood as a set (two or more) of coordinates in a global coordinate system.

### Surrounding environment

The surrounding environment, herein also referred to as surrounding, of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

### If-terminology

As used herein, the term "if" may be construed to mean "when or "upon" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

### Obtaining

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### 3D Road Model

In the context of the present disclosure, the term "3D road model", may be understood as a virtual 3D representation of a road, which may be obtained from map data, and in particular High Definition map data (HD Map data). 3D road model may accordingly be understood as data describing the spatial geometry of the road (including any lane markers, road boundaries, barriers, sidewalks, etc.) in the surrounding environment of the vehicle. The term "spatial geometry" may be understood as the structure of spatial objects in terms of points, lines, polygons, polylines, and so forth.

### Perception data

The term "perception data" refers to the information gathered by sensors and other technologies that are used by ADS-equipped vehicles to detect and interpret their environment. This includes data collected from cameras, lidar, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system, whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

### Conventional ML/NN

The machine-learning algorithm (may also be referred to as machine-learning model, neural network, and so forth) is implemented in some embodiments using publicly available suitable software development machine learning code elements, for example, such as those which are available in PyTorch, Keras and TensorFlow or in any other suitable software development platform, in any manner known to be suitable to someone of ordinary skill in the art.

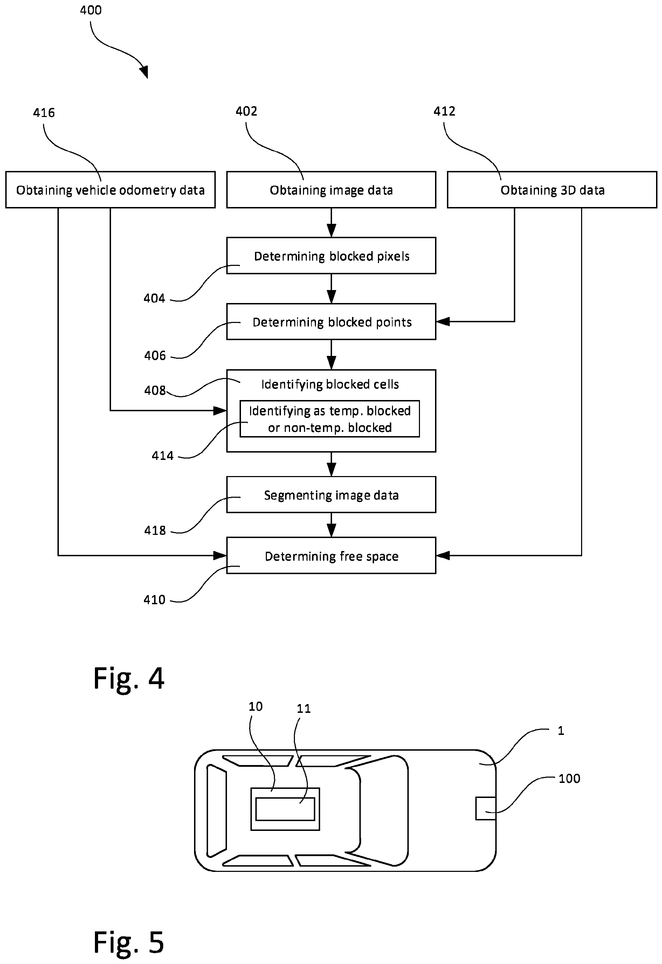

Fig. 4 is a flowchart illustrating a method 400 for identifying free space in the surrounding of the vehicle 1. The method comprises obtaining 402 the image data 202 by the image sensor 100 comprised in the vehicle 1, wherein the image data is depicting the surrounding of the vehicle. Next, the method may comprise determining 404 blocked pixels in the image data 202, wherein the blocked pixels are blocked due to that one or more objects are obstructing the image sensor's field of view, but also due to sun glare or other non-objects. The blocked pixels may be determined by using a machine learning model, such as a neural network. Another option is to use pre-determined algorithms determining the blocked pixels by conducting e.g. edge detection analysis.

Then, the method may continue with determining 406 blocked points linked to the blocked pixels by transforming the blocked pixels of the image plane 204 of the image sensor 100 into the blocked points in the ground plane 206 of the surrounding by using the planar projection assumption model 200. Once having the blocked points determined, the method may proceed with identifying 408 blocked cells and non-blocked cells of the occupancy grid 102 in the ground plane 206. This may be achieved by determining the blocked points in the ground plane for different cells of the occupancy grid, wherein the cell is identified as one of the blocked cells if a blockage criterion is met and identified as one of the non-blocked cells if a non-blockage criterion is met. The blockage criterion may be, by way of example, whether or not an aggregated number of blocked points in a specific cell is above a threshold or not. Another option is to determine whether or not the specific cell is blocked or not by having the blockage criterion being related to a distribution of the blocked points within the cell. Further, the blockage criterion may be a ratio of blocked points versus non-blocked points. The blockage criterion may also be a combination of different sub-criteria. The non-blockage criterion may be an inverse of the blockage criterion, that is, in case the cell is not blocked, it is to be seen as non-blocked. Another option is to have e.g. a blockage threshold that the number of blocked points should exceed in order to have the blockage criterion met, and a non-blockage threshold that the number of blocked points should be below in order to have the non-blockage criterion met. The blockage threshold and the non-blockage threshold may be different, thereby making it possible to allow some cells to be undetermined, which may be advantageous in some applications and which may result in a more reliable determination of the free space. Different cells of the occupancy grid may have different blockage criteria, and also different non-blockage criteria. For instance, these criteria may depend on a distance between the cell and the vehicle such that cells in a farmost part of the grid has different criteria compared to cells in a nearest part of the grid.

Thereafter, the method may comprise determining 410 the free space in the surrounding of the vehicle based on the image data in combination with status of the different cells in the occupancy grid, wherein the status of one the different cells comprises being one of the blocked cells or being one of the non-blocked cells.

As illustrated, the method may further comprise obtaining 412 the 3D data by a 3D sensor arrangement comprised in the vehicle. The 3D data, or depth data, is representing the surrounding of the vehicle, and is at least in part overlapping with the image data. The 3D sensor arrangement may comprise a Light Detection and Ranging (LiDAR) sensor, a stereo camera arrangement and/or a mono camera combined with a neural network trained to generate the 3D data based on monocular image data. The step of determining 406 the blocked points linked to the blocked pixels may be based on the planar projection model in combination with image data in conjunction with the 3D data. The 3D data may be obtained by using the image sensor 100 in combination with a machine learning model, such as an artificial neural network, trained to generate the 3D data based on the image data. In this way, the same image sensor can be used both for generating the image data as well as the 3D data.

Further, the method may comprise identifying 414 the blocked cells of the occupancy grid as temporarily blocked cells or non-temporarily blocked cells, wherein the temporarily blocked cells are estimated to be blocked for a pre-set period of time or less, and the non-temporarily blocked cells are estimated to be blocked for more than the pre-set period of time, such as one second. The status of the blocked cells of the occupancy grid linked to the non-temporarily blocked cells may be assigned as one of the blocked cells while the blocked cells of the occupancy grid linked to the temporarily blocked cells may be assigned as one of the non-blocked cells and assigned with the image data used, directly or indirectly, in a preceding frame among a plurality of frames captured over a period of time.

The method 400 may also comprise obtaining 416 vehicle odometry data from the vehicle for the plurality of frames captured over the period of time. The vehicle odometry data may comprise sensor data retrieved from sensors of the vehicle, such as wheel encoders, and/or visual odometry data comprising visual features of the surrounding. The vehicle odometry data may be used as input to the machine learning model together with the image data of the plurality of frames for determining the temporarily and non-temporarily blocked cells. The visual odometry data may be obtained by the image sensor 100. In this way, the same sensor may be used for capturing the image data, generating the depth data, or 3D data, in combination with the machine learning model, and also generate the vehicle odometry data.

The method may also comprise segmenting 418 the image data into objects, wherein each object is representing a sub-space of the surrounding, wherein each of the objects is linked to one or more classes, wherein the classes comprise road object and non-road object. The step of determining 410 the free space in the surrounding of the vehicle may be based on the image data in combination with the status of the different cells of the occupancy grid as well as the objects classified as road objects and/or the objects classified as non-road objects.

Non-blocked pixels of the image plane may be refrained from being transformed into non-blocked points in the ground plane by using the planar projection assumption model. By doing so, the calculations may be limited to the blocked pixels, which in turn results in that the computational efficiency can be improved.

As illustrated, the 3D data may not only be taken into account in the step of determining 406 the blocked points, but also in the step of determining 410 the free space. The vehicle odometry data may, as illustrated, be taken into account in the step of identifying the blocked cells including, but not limited to, the temporarily and non-temporarily blocked cells. In addition, the vehicle odometry data may also be taken into account in the step of determining 410 the free space.

The method 400 is preferably a computer-implemented method, performed by a processing system of the ADS-equipped vehicle. The processing system may for example comprise one or more processors and one or more memories coupled to the one or more processors, wherein the one or more memories store one or more programs that perform the steps, services and functions of the method 400 disclosed herein when executed by the one or more processors.

Executable instructions for performing these functions are, optionally, included in a non-transitory computer-readable storage medium or other computer program product configured for execution by one or more processors.

Fig. 5 is a schematic block diagram representation of the apparatus 10 for determining a representation of one or more road objects of a road for a vehicle traveling on the road. The system 10 comprises control circuitry (e.g. one or more processors) 11 configured to perform the functions of the method 400 disclosed herein, where the functions may be included in a non-transitory computer-readable storage medium or other computer program product configured for execution by the control circuitry 11. In other words, the apparatus 10 comprises one or more memory storage areas comprising program code, the one or more memory storage areas and the program code configured to, with the one or more processors 11, cause the apparatus 10 to perform the method 400 according to any one of the embodiments disclosed herein. The apparatus 10 may, as illustrated, form part of the vehicle 1. The vehicle 1 may also comprise the image sensor 100.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

## Claims

1. A method (400) for identifying free space in a surrounding of a vehicle (1), the method comprising
obtaining (402) image data (202) by an image sensor (100) comprised in the vehicle (1), wherein the image data is depicting the surrounding of the vehicle,
determining (404) blocked pixels in the image data (202), wherein the blocked pixels are blocked due to obstructions of the image sensor's field of view,
determining (406) blocked points linked to the blocked pixels by transforming the blocked pixels of an image plane (204) of the image sensor (100) into the blocked points in a ground plane (206) of the surrounding by using a planar projection assumption model (200),
identifying (408) blocked cells and non-blocked cells of an occupancy grid (102) in the ground plane (206) by determining the blocked points in the ground plane for different cells of the occupancy grid, wherein the cell is identified as one of the blocked cells if a blockage criterion is met and identified as one of the non-blocked cells if a non-blockage criterion is met, and
determining (410) the free space in the surrounding of the vehicle based on the image data in combination with status of the different cells in the occupancy grid, wherein the status of one the different cells comprises being one of the blocked cells or being one of the non-blocked cells.

2. The method according to claim 1, further comprising
obtaining (412) 3D data representing the surrounding of the vehicle,
wherein the step of determining (406) the blocked points linked to the blocked pixels comrprises transforming the blocked pixels of the image plane (204) of the image sensor (100) into the blocked points in the ground plane (206) of the surrounding by using the planar projection assumption model (200) based on the image data (202) in conjunction with the 3D data.

3. The method according to claim 2, wherein the 3D data is obtained by using the image sensor (100) in combination with a machine learning model, such as an artificial neural network, trained to generate the 3D data based on the image data.

4. The method according to any one of the preceding claims, wherein the image data comprises a plurality of frames captured over a period of time, wherein the step of determining (406) the blocked pixels further comprises distinguishing for the blocked pixels between temporarily blocked pixels and non-temporarily blocked pixels, wherein the temporarily blocked pixels are estimated to be blocked for a pre-set period of time or less, and the non-temporarily block pixels are estimated to be blocked for more than the pre-set period of time, such as one second.

5. The method according to any one of the preceding claims, wherein temporarily blocked cells and non-temporarily blocked cells are determined based on historical occupancy grids and vehicle odometry data, such as visual odometry data.

6. The method according to claim 4 or 5, wherein the status of the blocked cells of the occupancy grid linked to the non-temporarily blocked pixels is assigned as one of the blocked cells while the blocked cells of the occupancy grid linked to the temporarily blocked pixels are assigned as one of the non-blocked cells and assigned with the image data used in a preceding frame among the plurality of frames.

7. The method according to any one of the preceding claims, further comprising
identifying (414) the blocked cells of the occupancy grid as temporarily blocked cells or non-temporarily blocked cells, wherein the temporarily blocked cells are estimated to be blocked for a pre-set period of time or less, and the non-temporarily blocked cells are estimated to be blocked for more than the pre-set period of time, such as one second,
wherein the status of the blocked cells of the occupancy grid linked to the non-temporarily blocked cells is assigned as one of the blocked cells while the blocked cells of the occupancy grid linked to the temporarily blocked cells are assigned as one of the non-blocked cells and assigned with the image data used in a preceding frame among a plurality of frames captured over a period of time.

8. The method according to any one of claims 4 to 7, further comprising
obtaining (416) the vehicle odometry data from the vehicle for the plurality of frames captured over the period of time, wherein the vehicle odometry data comprises the visual odometry data comprising visual features of the surrounding,
wherein the vehicle odometry data is obtained by the image sensor (100).

9. The method according to any one of the preceding claims, wherein the image sensor is covered by a windshield of the vehicle, wherein the windshield is provided with one or more wipers (216) that during use is temporarily obstructing the field of view of the image sensor.

10. The method according to any one of the preceding claims, wherein the image sensor is covered by a protective glass, wherein wipers and/or droplets placed on the protective glass give rise to the temporarily blocked pixels and fog, frost, sun glare and/or dirt on the protective glass give rise to the non-temporarily blocked pixels.

11. The method according to any one of the preceding claims, wherein non-blocked pixels of the image plane are refrained from being transformed into non-blocked points in the ground plane by using the planar projection assumption model.

12. The method according to any one of the preceding claims, further comprising
segmenting (418) the image data into objects, wherein each object is representing a sub-space of the surrounding, wherein each of the objects is linked to one or more classes, wherein the classes comprise road object and non-road object,
wherein the step of determining the free space in the surrounding of the vehicle is based on the image data in combination with the status of the different cells of the occupancy grid as well as the objects classified as road objects and/or the objects classified as non-road objects.

13. A computer program product comprising instructions which, when the program is executed by a computing device, causes the computer to carry out the method (300) according to any one of the claims 1 - 12.

14. An apparatus (10) for identifying free space in a surrounding of a vehicle (1), the apparatus comprising a control circuitry (11) configured to
obtain image data (202) by an image sensor (100) comprised in the vehicle (1), wherein the image data is depicting the surrounding of the vehicle,
determine blocked pixels in the image data based on the image data, wherein the blocked pixels are blocked due obstructions of the image sensor's field of view,
determine blocked points linked to the blocked pixels by transforming the blocked pixels of an image plane of the image sensor into the blocked points in a ground plane of the surrounding by using a planar projection assumption model,
identify blocked cells and non-blocked cells of an occupancy grid in the ground plane by determining the blocked points in the ground plane for different cells of the occupancy grid, wherein the cell is identified as one of the blocked cells if a blockage criterion is met and identified as one of the non-blocked cells if a non-blockage criterion is met, and
determine the free space in the surrounding of the vehicle based on the image data in combination with the status of the different cells in the occupancy grid, wherein the status of one the different cells is either being one of the blocked cells or being one of the non-blocked cells.

15. The apparatus (10) according to claim 14, wherein the control circuitry is further configured to
obtain 3D data representing the surrounding of the vehicle, wherein the blocked points linked to the blocked pixels is determined by transforming the blocked pixels of the image plane (204) of the image sensor (100) into the blocked points in the ground plane (206) of the surrounding by using the planar projection assumption model (200) based on the image data (202) in conjunction with the 3D data.

16. A vehicle (1) comprising
an image sensor (100), and
an apparatus (10) according to claim 14 or 15.
